# FASCICULE DE BREVET EUROPEEN

(11) **EP 0 539 282 B1**
(45) Date de publication et mention de la délivrance du brevet: **29.05.1996**
(21) Numéro de dépôt: 92402863.2
(22) Date de dépôt: 20.10.1992
(51) Int. Cl.: F16F 13/00

(54) **Perfectionnements aux supports antivibratoires hydrauliques**
Verbesserungen an hydraulischen Antischwingungslagern
Improvements to hydraulic anti-vibration mountings

(30) Priorité: 22.10.1991 FR 9113023
(43) Date de publication de la demande: 28.04.1993
(73) Titulaire: HUTCHINSON, F-75008 Paris (FR)
(72) Inventeur: Bouhier, Bernard, F-18100 Vierzon (FR)
(74) Mandataire: Behaghel, Pierre

(56) Documents cités:
- EP-A- 0 314 913
- FR-A- 2 587 774
- Patent Abstracts of Japan vol. 12, no.83 (M-677)(2930) 16 Mars 1988 & JP-A- 62 224 744 (KINUGAWA RUBBER) 2 Octobre 1987
- Patent Abstracts of Japan vol.13, no. 217 (M-828)(3565) 22 Mai 1989 & JP-A- 1 035 138 (TOYOTA MOTOR) 6. February 1989

## Description

L'invention est relative aux supports antivibratoires hydrauliques du type à traversée axiale comprenant :
- une armature tubulaire rigide interne,
- une armature tubulaire rigide externe entourant l'armature interne,
- deux bagues élastiques interposées radialement entre les deux armatures, à leurs deux extrémités axiales et reliant entre elles ces deux armatures de façon à former avec elles une poche annulaire étanche et à travailler essentiellement au cisaillement lors des déplacements relatifs axiaux des deux armatures,
- une masse de liquide remplissant ladite poche,
- et une rondelle intermédiaire noyée dans la poche et reliant elle aussi de façon étanche les deux armatures de façon à diviser ladite poche en deux chambres annulaires, ladite rondelle comprenant un anneau élastique et un anneau rigide s'entourant mutuellement et l'anneau rigide étant évidé par un passage étranglé dépourvu de clapet qui relie entre elles les deux chambres.

De tels supports sont destinés à être interposés entre deux éléments rigides, tels que par exemple un châssis de véhicule et le moteur de ce véhicule ou une biellette faisant partie d'un train de suspension dudit véhicule, en vue d'amortir la transmission des oscillations ou vibrations de l'un de ces éléments à l'autre.

Leur fonctionnement est le suivant : l'application d'une oscillation sur l'une des deux armatures tubulaires par rapport à l'autre selon la direction axiale de ces armatures a pour effet de déformer alternativement les deux chambres en refoulant alternativement du liquide d'une chambre à l'autre à travers le passage étranglé et, pour une valeur prédéterminée de la fréquence des oscillations, le volume de liquide présent dans ledit passage étranglé est soumis à un phénomène de résonance qui a pour effet d'assurer efficacement l'amortissement désiré.

Dans les modes de réalisation connus des supports du genre en question, les bagues et l'anneau présentent des portions annulaires élastiquement déformables qui sont disposées axialement en regard les unes des autres (voir par exemple le document US-A-4 733 854).

L'expérience montre alors ce qui suit :
- ou bien lesdites portions annulaires sont relativement souples, c'est-à-dire se prêtent facilement à des déformations à la flexion ou au cisaillement axial, et dans ce cas l'application des oscillations à amortir sur l'une des deux armatures tubulaires risque de se traduire par de simples déformations élastiques desdites portions en regard ne faisant pas intervenir de refoulement véritable de liquide à travers le passage étranglé,
- ou bien lesdites portions annulaires sont relativement raides et, dans ce cas, les oscillations à traiter peuvent être directement transmises par ces portions d'une armature à l'autre sans faire intervenir l'amortissement hydraulique.

L'invention a pour but, surtout, de supprimer ces inconvénients en disposant de supports amortisseurs à la fois sensibles et efficaces.

A cet effet, les supports antivibratoires hydrauliques du genre en question selon l'invention sont essentiellement caractérisés en ce que leurs deux bagues élastiques sont totalement décalées radialement par rapport à l'anneau élastique constitutif de la rondelle intermédiaire.

En d'autres termes, les projections axiales desdites bagues et dudit anneau ne se recouvrent pas, même en partie.

Dans des modes de réalisation avantageux, on a recours en outre à l'une et/ou à l'autre des dispositions suivantes :
- l'anneau élastique constitutif de la rondelle intermédiaire étant intérieur à l'anneau rigide, chaque bague élastique prolonge radialement vers l'extérieur une pièce rigide annulaire intérieure solidarisée avec l'armature tubulaire intérieure et le diamètre extérieur de ladite pièce annulaire est supérieur au diamètre intérieur de l'anneau rigide,
- l'anneau élastique constitutif de la rondelle intermédiaire étant extérieur à l'anneau rigide, chaque bague élastique prolonge radialement vers l'intérieur une pièce rigide annulaire extérieure solidarisée avec l'armature tubulaire extérieure et le diamètre intérieur de ladite pièce annulaire est inférieur au diamètre extérieur de l'anneau rigide.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

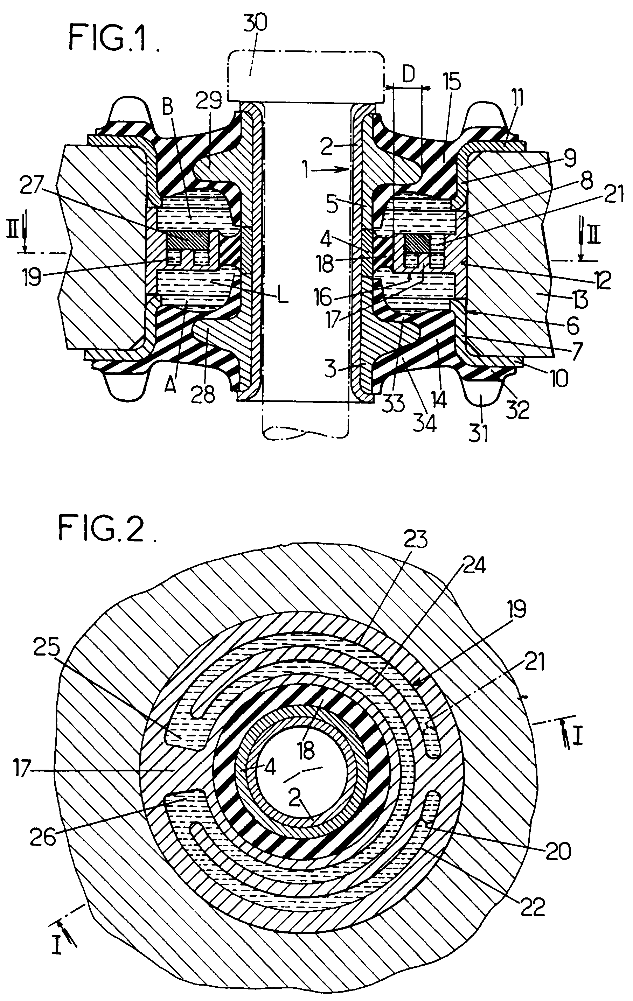

Les figures 1 et 2, de ce dessin, montrent respectivement en coupe axiale selon I-I figure 2 et en coupe transversale selon II-II figure 1, un support antivibratoire hydraulique établi selon l'invention.

Ce support présente une forme générale de révolution autour d'un axe vertical et comprend :
- une armature tubulaire rigide intérieure 1 comprenant un tronçon de tube 2 et trois colliers cylindriques 3, 4 et 5 entourant jointivement ledit tronçon, ces trois colliers étant juxtaposés axialement les uns contre les autres et maintenus ainsi par sertissage vers l'extérieur des extrémités du tronçon de tube,
- une armature tubulaire rigide extérieure 6 comprenant trois colliers cylindriques 7,8 et 9 juxtaposés axialement dont les deux extrêmes 7 et 9 sont prolongés radialement par des collerettes extérieures 10 et 11 et sont emmanchés à force dans respectivement les deux extrémités axiales d'un alésage 12 évidé dans une pièce 13,
- une bague élastique 14 adhérée intérieurement sur le collier 3 et extérieurement sur le collier 7,
- une bague élastique 15 adhérée intérieurement sur le collier 5 et extérieurement sur le collier 9,
- un liquide L remplissant la poche annulaire constituée par l'ensemble des armatures tubulaires rigides 1 et 6 et des bagues 14 et 15,
- et une cloison annulaire intermédiaire 16 immergée dans la poche ci-dessus définie et reliant radialement entre eux de manière étanche les deux colliers 4 et 8 de façon à diviser la poche annulaire en deux chambres annulaires A et B.

La cloison 16 comprend elle-même :
- un anneau rigide 17 prolongeant intérieurement le collier 8 et faisant bloc avec lui,
- et un anneau élastique 18 reliant radialement de façon étanche le bord intérieur de l'anneau 17 au collier 4.

Un canal étroit 19 évidé dans l'anneau 17 fait communiquer en permanence les deux poches A et B.

Pour conférer à ce canal une grande longueur, on lui donne avantageusement une forme en labyrinthe du genre de celle représentée sur les dessins : entre son embouchure 20 dans la chambre A et son embouchure 21 dans la chambre B, toutes les deux orientées axialement, le canal 19 comprend successivement deux tronçons extérieurs 22,23 s'étendant chacun selon un arc de cercle un peu inférieur à 180° et reliés entre eux par un tronçon intérieur 24 s'étendant selon un arc de cercle un peu inférieur à 360°, les tronçons extérieurs étant raccordés au tronçon intérieur par deux raccords radiaux 25,26.

Dans le mode de réalisation illustré de ce canal 19, les tronçons et raccords ci-dessus sont des gorges évidées axialement dans un disque rigide constitutif de l'anneau 17 et ces gorges sont refermées par une rondelle 27 évidée par l'embouchure 21.

Les faces extérieures des colliers cylindriques 3 et 5 contre lesquelles sont adhérées les bagues élastiques 14 et 15 ne sont pas des faces purement cylindriques s'étendant à une petite distance radiale du tronçon de tube 2, comme c'est le cas dans un certain nombre de modes de réalisation connus.

Ces colliers 3 et 5 sont ici prolongés extérieurement par des bourrelets annulaires rigides radiaux 28,29 faisant corps avec eux et présentant une relativement grande dimension radiale.

Cette dimension est telle que chacun des deux bourrelets 28,29 en question empiète radialement sur l'anneau rigide 17 d'une distance D.

En d'autres termes, si l'on considère la projection axiale de chaque bourrelet 28,29 et celle de l'anneau 17 sur un même plan transversal, ces deux projections se recouvrent le long d'une couronne de largeur radiale D.

En quelque sorte, l'anneau 17 constitue alors un anneau en "chicane" entre les deux bourrelets 28 et 29.

Cette construction est avantageuse pour les raisons suivantes.

Même si l'on choisit les caractéristiques (épaisseur, dureté...) des éléments élastiques 14,15 et 18 de façon telle que ces éléments soient relativement souples, il résulte du recouvrement radial signalé ci-dessus entre l'anneau rigide 17 et les bourrelets rigides 28 et 29 que toute oscillation axiale mutuelle entre les deux armatures rigides 1 et 6 se traduit par un refoulement efficace de liquide à travers le passage étranglé 19.

En effet, lors de la survenance d'une telle oscillation, les poussées axiales exercées alternativement sur les volumes incompressibles de liquide compris axialement dans les zones de chevauchement ou recouvrement définies ci-dessus ne peuvent guère se traduire par des déformations des bagues ou de l'anneau élastiques, lesquels ne se trouvent pas sur leur trajectoire axiale : lesdites poussées assurent donc des refoulements forcés d'une partie desdits volumes dans le passage 19.

Malgré cette efficacité au niveau des refoulements de liquide dans le passage étranglé, on n'observe pas de transmission directe des oscillations ou vibrations de l'une des armatures tubulaires à l'autre, à travers les éléments élastiques 14,15 et 18, en raison de la relative souplesse de ces derniers.

L'amortissement qui résulte d'une telle construction est donc en définitive particulièrement efficace et complet.

On voit encore sur la figure 1 :
- un axe épaulé 30 -représenté en traits mixtes- qui traverse jointivement le tronçon de tube 2 et qui constitue l'un des deux éléments rigides entre lesquels on désire amortir le transfert des vibrations, l'autre élément rigide étant la pièce 13, ces deux éléments 30 et 13 étant eux-mêmes solidarisés de toute façon désirable avec respectivement deux ensembles appropriés tels qu'un châssis de véhicule et que le moteur à combustion interne ou un train de suspension de ce véhicule,
- et des bossages 31 venus de moulage avec les bagues élastiques 14 et 15 et faisant saillie axialement sur des rondelles 32 également venues de moulage avec lesdites bagues et recouvrant les collerettes 10 et 11, lesdites bagues pouvant servir de butées de fin de course axiale en venant en contact avec des portées en regard solidaires de l'élément 30.

On voit également sur cette figure 1 que les bourrelets 28,29 sont eux-mêmes enrobés par des voiles annulaires 33,34 prolongeant radialement vers l'intérieur les bagues élastiques 14 et 15 et venus de moulage avec ces dernières.

En suite de quoi, et quel que soit le mode de réalisation adopté, on obtient finalement des supports antivibratoires hydrauliques dont la constitution, le fonctionnement et les avantages résultent suffisamment de ce qui précède.

Comme il va de sol, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où les pièces annulaires constituées par les colliers 3,5 et les bourrelets annulaires 28,29 qui les prolongent extérieurement seraient remplacés par des armatures rigides annulaires présentant notamment une demi-section axiale en forme de L, l'un des bras du L définissant encore un collier cylindrique et son autre bras formant une collerette radiale qui prolonge ledit collier vers l'extérieur à l'extrémité axiale, de ce collier, qui est située du côté du centre du support concerné, les collerettes ainsi définies délimitant elles-mêmes en partie les poches A et B,
- et celles où les positions relatives intérieure et extérieure des portions rigides et des portions élastiquement déformables comprises par les bagues 14 et 15 et par la rondelle 16 seraient inversées par rapport à celles décrites et illustrées ci-dessus.

## Revendications

1. Support antivibratoire hydraulique du type à traversée axiale comprenant une armature tubulaire rigide interne (1), une armature tubulaire rigide externe (6) entourant l'armature interne, deux bagues élastiques (14,15) interposées radialement entre les deux armatures, à leurs deux extrémités axiales et reliant entre elles ces deux armatures de façon à former avec elles une poche annulaire étanche et à travailler essentiellement au cisaillement lors des déplacements relatifs axiaux des deux armatures, une masse de liquide (L) remplissant la poche, et une rondelle intermédiaire (16) noyée dans la poche et reliant elle aussi de façon étanche les deux armatures de façon à diviser ladite poche en deux chambres annulaires (A,B), ladite rondelle comprenant un anneau élastique (18) et un anneau rigide (17) s'entourant mutuellement et l'anneau rigide étant évidé par un passage étranglé (19) dépourvu de clapet qui relie entre elles les deux chambres, caractérisé en ce que ses deux bagues élastiques (14,15) sont totalement décalées radialement par rapport à l'anneau élastique (18) constitutif de la rondelle intermédiaire (16), les projections axiales desdites bagues et dudit anneau ne se recouvrant donc pas, même en partie.

2. Support selon la revendication 1, caractérisé en ce que, l'anneau élastique (18) constitutif de la rondelle intermédiaire (16) étant intérieur à l'anneau rigide (17), chaque bague élastique (14,15) prolonge radialement vers l'extérieur une pièce rigide annulaire intérieure (28,29) solidarisée avec l'armature tubulaire intérieure (1-5) et en ce que le diamètre extérieur de ladite pièce annulaire est supérieur au diamètre intérieur de l'anneau rigide.

3. Support selon la revendication 1, caractérisé en ce que, l'anneau élastique constitutif de la rondelle intermédiaire étant extérieur à l'anneau rigide, chaque bague élastique prolonge radialement vers l'intérieur une pièce rigide annulaire extérieure solidarisée avec l'armature tubulaire extérieure et en ce que le diamètre intérieur de ladite pièce annulaire est inférieur au diamètre extérieur de l'anneau rigide.

## Patentansprüche

1. Hydraulisches Antischwingungslager mit axialer Durchquerung, das aus folgenden Teilen besteht: einer starren, rohrförmigen inneren Armatur (1), einer starren, rohrförmigen äußeren Armatur (6), die die innere Armatur umgibt, zwei elastischen Ringen (14, 15), die in radialer Richtung zwischen den beiden axialen Enden der Armaturen eingefügt sind, und die die beiden Armaturen derart miteinander verbinden, daß sie mit diesen eine dichte, ringförmige Tasche bilden und bei axialen Relativverschiebungen der beiden Armaturen im wesentlichen auf Scherung arbeiten, einer flüssigen Masse (L), die die Tasche ausfüllt, und einer Zwischenscheibe (16), die in die Tasche eingelassen ist und die die beiden Armaturen ebenfalls dicht verbindet, derart, daß die Tasche in zwei ringförmige Kammern (A, B) unterteilt wird, wobei die Zwischenscheibe aus einem elastischen Ring (18) und einem starren Ring (17) besteht, die umeinander angeordnet sind, und in dem starren Ring ein verengter Durchgang (19) ohne Ventil ausgenommen ist, der die beiden Kammern miteinander verbindet, dadurch gekennzeichnet, daß die beiden elastischen Ringe (14, 15) radial in bezug auf den elastischen Ring (18), der Bestandteil der Zwischenscheibe (16) ist, vollkommen versetzt angeordnet sind, wobei die axialen Projektionen dieser Ringe und dieses Ringes sich demzufolge auch nicht teilweise überdecken.

2. Hydraulisches Antischwingungslager nach Anspruch 1, dadurch gekennzeichnet, daß der elastische Ring (18), der Bestandteil der Zwischenscheibe (16) ist, im Inneren des starren Ringes (17) liegt, wobei jeder elastische Ring (14, 15) ein starres, ringförmiges inneres Teil (28, 29) radial nach außen verlängert, das mit der inneren rohrförmigen Armatur (1-5) verbunden ist, und daß der Außendurchmesser des erwähnten ringförmigen Teils größer ist als der Innendurchmesser des starren Ringes.

3. Hydraulisches Antischwingungslager nach Anspruch 1, dadurch gekennzeichnet, daß der elastische Ring, der Bestandteil der Zwischenscheibe ist, außerhalb des starren Ringes liegt, wobei jeder elastische Ring in radialer Richtung nach innen ein starres, ringförmiges äußeres Teil verlängert, das mit der äußeren rohrförmigen Armatur verbunden ist, und daß der Innendurchmesser des ringförmigen Teils kleiner ist als der Außendurchmesser des starren Ringes.

## Claims

1. Hydraulic anti-vibration mounting of the radial-crosspiece type, comprising:
an internal rigid tubular fitting (1), an external rigid tubular fitting (6) surrounding the internal fitting; two resilient rings (14, 15) interposed radially between the two fittings, at their two axial ends and connecting between them these two fittings to as to form therewith a sealed annular pocket operating substantially in a shearing fashion upon axial relative displacements of the two fittings; a mass of liquid (L) filling said pocket;
and an intermediate washer (16) submerged in the pocket and also connecting in a sealed manner the two fittings so as to divide said pocket in two annular chambers (A, B), said washer comprising a resilient annular band (18) and a rigid annular band (17), one surrounding the other, and the rigid band being emptied by a constricted conduit (19) without valve flap which interconnects the two chambers, caracterised in that their two resilient rings (14, 15) are totally offset radially with respect to the resilient band (18) constituting the intermediate washer (16), the axial projections of said rings and of said band then not being superimposed, even partially, on one another.

2. Mounting according to claim 1, characterized in that the resilient annular band (18) constituting the intermediate washer (16) being internal to the rigid annular band (17), each resilient ring (14, 15) extends radially towards the exterior an internal annular rigid component (28, 29) integral with the internal tubular fitting (1-5), and in that the external diameter of the said annular component is greater than the internal diameter of the rigid annular band.

3. Mounting according to claim 1, characterized in that the resilient annular band constituting the intermediate washer being external to the rigid annular band, each resilient ring extends radially towards the interior an external annular rigid component integral with the external tubular fitting, and in that the internal diameter of the said annular component is smaller than the external diameter of the rigid annular band.
